# EUROPEAN PATENT APPLICATION

(11) **EP 2 712 183 A1**
(43) Date of publication of application: **26.03.2014**
(21) Application number: 12785053.5
(22) Date of filing: 18.05.2012
(51) Int. Cl.: H04N 7/173, H04H 20/06, H04H 20/10

(54) **BROADCAST EQUIPMENT**

(30) Priority: 19.05.2011 JP 2011112239
(71) Applicant: Japan Broadcasting Corporation, Shibuya-ku, Tokyo 150-8001 (JP)
(72) Inventor: MITSUYA, Shigeaki, Tokyo 157-8510 (JP); MATSUMURA, Kinji, Tokyo 157-8510 (JP); BABA, Akitsugu, Tokyo 157-8510 (JP); FUJISAWA, Hiroshi, Tokyo 157-8510 (JP); TAKECHI, Masaru, Tokyo 157-8510 (JP); KANATSUGU, Yasuaki, Tokyo 157-8510 (JP); HAMADA, Hiroyuki, Tokyo 157-8510 (JP)
(74) Representative: Fiesser, Gerold Michael
(86) International application number: PCT/JP2012/062766
(87) International publication number: WO 2012/157741

(57) **Abstract**

The purpose of the present invention is to provide broadcast equipment wherein an AIT working with a broadcast content can be replaced as necessary. The broadcast equipment is provided with a receiving unit (101) for receiving a broadcast signal, a separation processing unit (102) for separating the broadcast signal into a program content and control information, a content processing unit (103) for processing the program content, a erasing unit (104) for erasing the AIT included in the control information, a storage (105) for storing the AIT working with the program content, a readout unit (106) for reading out an AIT from the storage (105) on the basis of the information representing the program content included in the control information, an adding unit (107) for adding the AIT read out by the readout unit (106) to the control information from which the AIT is erased by the erasing unit (104), a multiplexing processing unit (108) for multiplexing the control information to which the AIT is newly added and the program content after being processed by the content processing unit (103), and a transmitting unit (109) for transmitting the multiplexed signal as a broadcast signal.

## Description

### TECHNICAL FIELD

This invention relates to broadcast equipment having the function of transmitting (delivering) a broadcast wave.

### BACKGROUND ART

In response to recent development in digitalization of broadcasting and broader bandwidths of communications, research and development has been implemented to achieve broadcast/communication integrated services.

According to an assumed aspect of this broadcast/communication integrated services, multiple contents are distributed through different transmission paths, specifically, broadcasting and communications, and the multiple distributed contents are integrated and presented on a receiver such as a digital television.

According to assumed service of the broadcast/communication integrated services, information about an application integrating with a broadcast content (application management information) is transmitted on a broadcast wave, and the integrating application is received through a communication network based on this application management information.

Patent Document 1: Japanese Unexamined Patent Application, Publication No. 2003-60931

### DISCLOSURE OF THE INVENTION

### Problems to be Solved by the Invention

Broadcasting includes nationwide relay broadcasting. For the nationwide relay, most of contents are generated by an original source station in Tokyo (hereinafter called a key station), and are transmitted to an affiliated broadcasting station in every local city (hereinafter called a subordinate station) which receives these contents through a relay channel.

In principle, a subordinate station broadcasts a content as it is transmitted from a key station. In some cases, however, the subordinate station replaces some of contents from the key station with those generated by the subordinate station and broadcasts the replaced contents. It is assumed for example that a subordinate station (broadcasting station in the Kansai area) replaces a weather forecast content (such as a weather forecast in the Kanto area) transmitted from a key station with a weather forecast content (such as a weather forecast in the Kansai area) of the subordinate station as a weather forecast in a news program to be broadcasted nationwide.

In this case, mismatch may occur if application management information integrating with the weather forecast content transmitted from the key station does not integrate with the replaced weather forecast content of the subordinate station.

In order to reduce a processing load on a server to distribute a integrating application, a designated server may differ between areas. This may require change of application management information, even if a broadcast content is not replaced.

Thus, it is an object of this invention to provide broadcast equipment that allows a subordinate station to replace application management information integrating with a broadcast content, where necessary.

### Means for Solving the Problems

Broadcast equipment according to this invention has a structure comprising: receiving unit that receives a broadcast signal distributed from a different broadcasting station; separation processing unit that separates the broadcast signal received by the receiving unit into a content such as video and control information; content processing unit that processes the content such as video separated by the separation processing unit; erasing unit that erases application management information from the control information separated by the separation processing unit; storing unit that stores management information about a integrating application integrating with a content such as video into a storage; readout unit that reads out application management information integrating with the content such as video from the storage based on information indicating the content such as video and contained in the control information; adding unit that adds application management information read out by the readout unit to the control information from which application management information has been erased by the erasing unit; multiplexing processing unit that multiplexes control information to which new application management information has been added by the adding unit and a content such as video in a state after being processed by the content processing unit; and transmitting unit that transmits, as a broadcast signal, a signal resulting from the multiplexing process by the multiplexing processing unit.

According to this structure, the broadcast equipment of this invention replaces application management information in control information about a broadcast signal received by the receiving unit with application management information stored in the storage. This advantageously prevents mismatch between a content such as video (broadcast content) and application management information to occur in a subordinate station, for example.

The broadcast equipment may comprise determination control unit that determines if application management information should be replaced. The storage may have an association table containing content identification information uniquely identifying a content such as video and application management information integrating with this content such as video that are associated with each other. The determination control unit may refer to the association table. If confirming based on content identification information therein about a content such as video that the storage stores application management information relating to this content such as video, the determination control unit may exert control to make the erasing unit and the readout unit replace application management information.

According to this structure, the broadcast equipment of this invention refers to the association table. If a given condition is satisfied, the broadcast equipment can replace application management information in control information about a broadcast signal received by the receiving unit with application management information stored in the storage.

In the broadcast equipment, the application management information may contain information about a location of a integrating application.

According to this structure, the broadcast equipment of this invention replaces application management information in control information about a broadcast signal received by the receiving unit with application management information stored in the storage. This allows a integrating application to be downloaded to a server differing between areas, so that a processing load on the server can be reduced.

In the broadcast equipment, the content processing unit may replace an advertising content in the content such as video with a different advertising content, and the readout unit may read out application management information from the storage that corresponds to the advertising content replaced by the content processing unit.

According to this structure, the broadcast equipment of this invention further replaces application management information in response to replacement of an advertising content. This advantageously prevents mismatch between an advertising content and application management information to occur in a subordinate station, for example.

### Effects of the Invention

This invention allows replacement of application management information integrating with a broadcast content, where necessary.

### BRIEF DESCRIPTION OF THE DRAWINGS

FIG. 1 is an overall configuration diagram showing a broadcast/communication integrated system;
FIG. 2 is a diagram showing a transmission protocol stack of broadcast signals for digital broadcasting;
FIG. 3 is a block diagram showing a functional configuration of a receiver;
FIG. 4 is a diagram showing an example of an AIT described in an XML format; and
Fig. 5 is a diagram showing the structure of broadcast equipment.

### EXPLANATION OF REFERENCE NUMERALS

- 1: broadcasting station
- 2: broadcasting antenna
- 3: service server
- 4: receiver
- 100: broadcast equipment
- 101: receiving unit
- 102: separation processing unit
- 103: content processing unit
- 104: erasing unit
- 105: storage
- 106: readout unit
- 107: adding unit
- 108: multiplexing processing unit
- 109: transmitting unit
- 110: determination control unit

### PREFERRED MODE FOR CARRYING OUT THE INVENTION

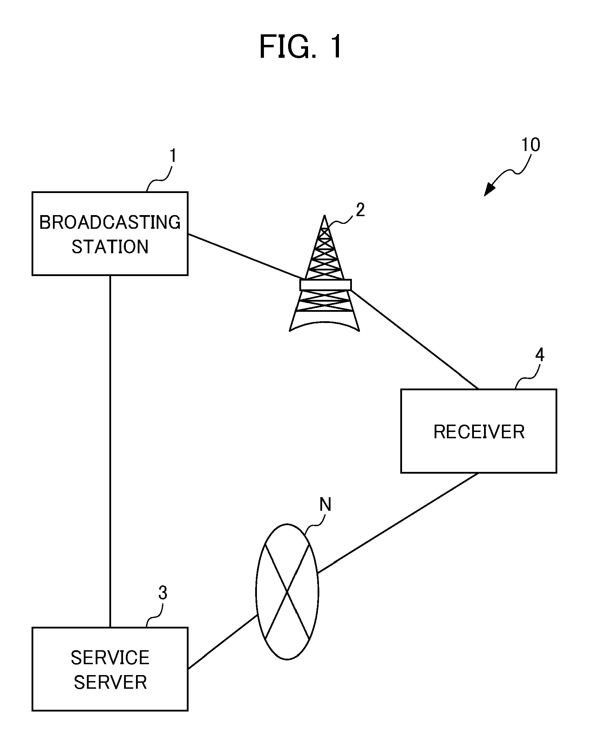

An embodiment of the present invention is hereinafter described with reference to the drawings. FIG. 1 is an overall configuration diagram of a broadcast/communication integrated system 10. The broadcast/communication integrated system 10 is configured to include a broadcasting station 1, a broadcasting antenna 2, a service server 3 (distribution server), and a receiver 4. The broadcasting station 1 provides broadcast services through an Integrated Services Digital Broadcasting (ISDB) scheme, and the service server 3 provides communication services through a communication network N configured by the Internet, or the like; and the broadcast/communication integrated system 10 integrates both services into broadcast/communication integrated services to be provided to a user of the receiver 4.

The broadcasting station 1 includes typical broadcasting facilities (not illustrated) for digital broadcasting; the facilities are configured to include a program scheduling facility, a program delivering facility, and a transmitting facility.

The broadcasting station 1 produces content, event information (Event Information Table: EIT), application management information (Application Information Table: AIT) and the like, by the broadcasting facilities. The broadcasting station 1 multiplexes the content, the event information, the AIT and the like, into broadcast signals, by the broadcasting facilities. The broadcasting station 1 modulates the broadcast signals into broadcast waves, by the broadcasting facilities, and broadcasts the broadcast waves through the broadcasting antenna 2.

The content included in the broadcast waves to be broadcast from the broadcasting station 1 include: program content configured to include audio and video content to be broadcast in accordance with a broadcast schedule, emergency content such as Earthquake Early Warning that occurs asynchronously to the program content, and the like.

The event information includes meta-information regarding content, such as program content names, airdate and airtime of the program content, and descriptions of the program content. The event information is hereinafter referred to as an EIT.

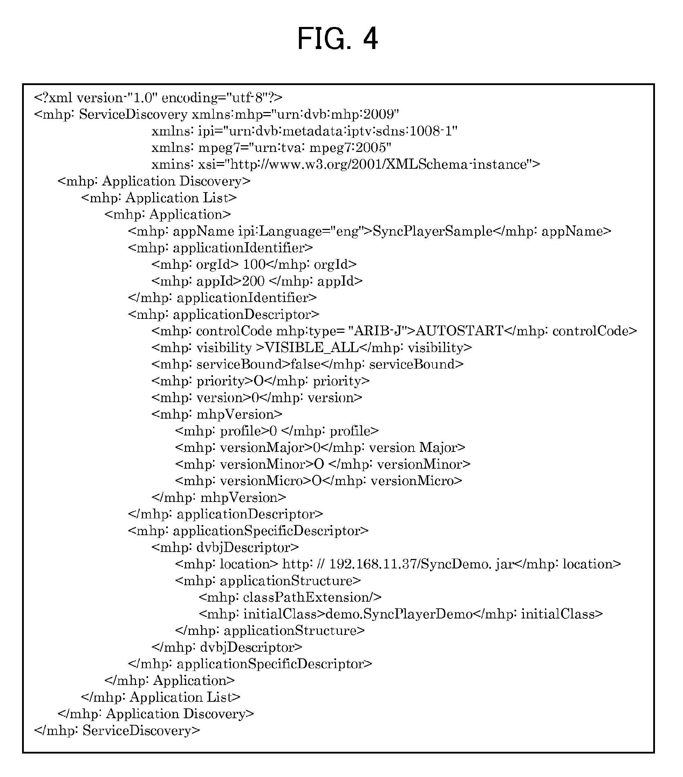

An AIT constitutes management information for managing a single or plurality of application programs (hereinafter described as an application), which are capable of providing content in conjunction with the program content to the receiver 4. An AIT includes a single or plurality of items of individual management information respectively corresponding to a single or plurality of applications, for the purpose of respectively managing the single or plurality of applications. The individual management information includes: an application ID for identifying an application; life cycle control information for controlling the life cycle of an application; and location information for indicating location of an application (see FIG. 4).

The content provided by an application includes: content linked with the program content; and content not linked with the program content. The content provided by an application is hereinafter referred to as application content.

The broadcast signals are identical to broadcast signals of conventional digital broadcasting, and are defined according to the standard of ARIB (registered trademark; Association of Radio Industries and Businesses).

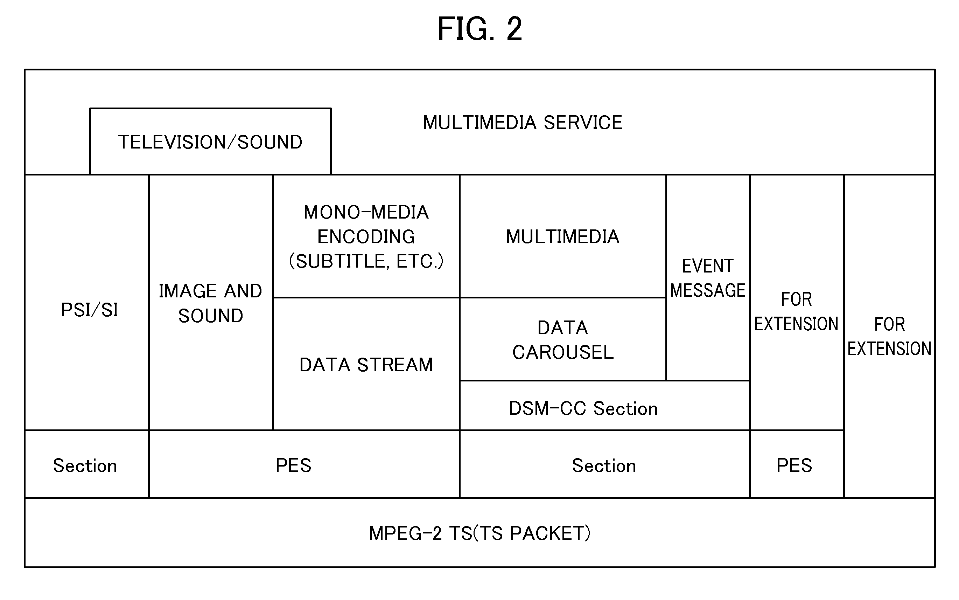

FIG. 2 is a diagram showing a transmission protocol stack of broadcast signals for digital broadcasting. As shown in FIG. 2, various data such as audio data and video data provided through digital broadcasting is stored in a TS packet (transport stream packet) defined according to the international standard of MPEG-2 Systems, and is transmitted by time-division multiplexing.

As shown in FIG. 2, PSI/SI (Program Specific Information/Service Information) is defined with regard to a Section in the TS packet. The PSI/SI includes information indicating a type of data stored in the TS packet or information indicating a type of content. The EIT is included in the SI.

Data transmission through a TS packet is classified into: a data transmission scheme using a Section; and a data transmission scheme (data stream transmission scheme) using a PES (Packetized Elementary Stream) packet.

The data transmission scheme using a Section includes a data carousel transmission scheme, and an event message transmission scheme.

The data carousel transmission scheme is a transmission scheme for repeatedly transmitting a single or plurality of items of data in a constant cycle, in which identification information for identifying individual data is assigned to individual data (module) transmitted through the transmission scheme. The data carousel transmission scheme is used for the purpose of causing the receiver 4 to acquire individual data at arbitrary timing.

The event message transmission scheme is a scheme for transmitting a trigger signal from the broadcasting station 1 to the receiver 4 The event message transmission scheme is used in a case of transmitting a message with a small volume of data from the broadcasting station 1 to the receiver 4.

The data stream transmission scheme is a transmission scheme for transmitting data as a stream, in which the transmitted data is contained in a PES packet. The data stream transmission scheme is used for transmitting real-time data such as image data, sound data and closed caption data, as well as data that requires synchronization with another stream.

In this regard, an AIT can be transmitted with various methods using a TS packet.

Namely, an AIT can be transmitted by providing a description to an EIT included in SI of a TS packet.

An AIT can be transmitted through the data carousel transmission scheme using a Section. In a case in which an AIT is transmitted through the data carousel transmission scheme, identification information is assigned to a module such that the receiver 4 can recognize the data as the AIT.

An AIT can be transmitted by multiplexing an image and sound of content into a PES.

An AIT can be stored in a TS packet through a description in binary representation or text representation in XML (Extensible Markup Language).

In the present embodiment, it is assumed that at least one of the abovementioned transmission schemes is defined in advance as a transmission scheme for an AIT.

The multimedia coding (Broadcast Markup Language: BML) is a standard defined in consideration of consistency with international standards based on xHTML defined by W3C (registered trademark, World Wide Web Consortium) by using ECMA Script based on Java Script (registered trademark) as a procedure-oriented language.

The service server 3 includes (although not illustrated): a content distribution server that distributes program content as well as content to be distributed to an application (application content); and an application distribution server that distributes various applications operating in the receiver 4.

The service server 3 is communicably connected to the facilities of the broadcasting station 1, and receives program content and metadata of the program content from the broadcasting station 1.

When the service server 3 receives an acquisition request for program content from the receiver 4, the service server 3 transmits the program content to the receiver 4.

The service server 3 stores applications, and when the service server 3 receives an acquisition request for an application from the receiver 4, the service server 3 transmits the application to the receiver 4. Furthermore, in a case in which an application is running in the receiver 4, the service server 3 transmits data of application content such as video data and audio data to the receiver 4.

The service server 3 stores an AIT and transmits the AIT multiplexed with the program content to the receiver 4. When the service server 3 receives an acquisition request for an AIT from the receiver 4, the service server 3 transmits the AIT to the receiver 4.

By executing predetermined processing on program content received through the communication to the service server 3 or the broadcasting from the broadcasting station 1, the receiver 4 outputs video data and audio data of the program content in synchronization. The receiver 4 acquires an application based on an AIT and executes the acquired application. Subsequently, by using the running application, the receiver 4 acquires video data and audio data of the application content from the service server 3, and outputs the data integrated into the video data and audio data of the program content. Functions of the receiver 4 are described in detail below.

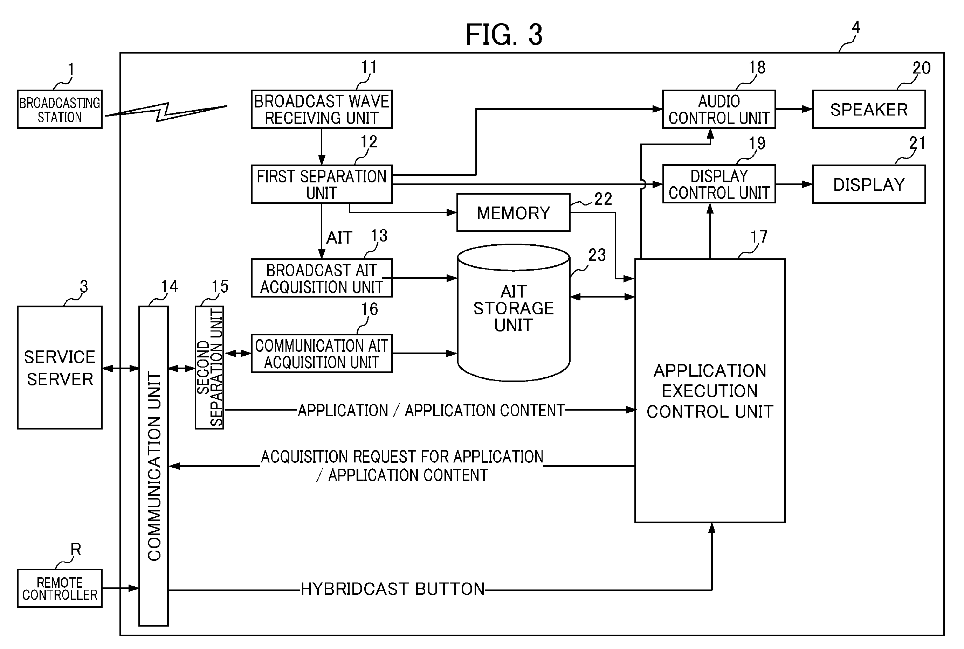

FIG. 3 is a block diagram showing a functional configuration of the receiver 4 according to the present embodiment.

The receiver 4 includes a broadcast wave receiving unit 11, a first separation unit 12, a broadcast-AIT acquisition unit 13, a communication unit 14, a second separation unit 15, a communication AIT acquisition unit 16, an operation receiving control unit 17, an audio control unit 18, a display control unit 19, a speaker 20, a display 21, memory 22, and an AIT storage unit 23.

The broadcast wave receiving unit 11 receives broadcast waves broadcast through the broadcasting antenna 2 from the broadcasting station 1.

The first separation unit 12 demodulates the broadcast waves received by the broadcast wave receiving unit 11, and extracts broadcast signals, i.e. TS packets, from the broadcast waves. By referring to PSI/SI of the TS packet, the first separation unit 12 determines the type of data included in the TS packet, and extracts various data such as images, sound, an EIT, etc. The first separation unit 12 extracts an AIT by referring to a Section and a PES, in accordance with a predefined AIT transmission scheme.

Subsequently, in a case in which the data included in the PES of the TS packet is audio data, the first separation unit 12 outputs the audio data to the audio control unit 18. In a case in which the data included in the PES of the TS packet is video data, the first separation unit 12 outputs the video data to the display control unit 19.

The first separation unit 12 stores the extracted EIT and other various data, into the memory 22. If extracting an AIT, the first separating unit 12 outputs the extracted AIT to the broadcast AIT acquiring unit 13.

The broadcast AIT acquiring unit 13 acquires an AIT output from the first separating unit 12 and stores the acquired AIT into the AIT storage 23.

The communication unit 14 is a communication interface for transmitting and receiving data with the service server 3 through the communication network N.

The second separation unit 15 determines the type of data received by the communication unit 14. In a case in which the received data is determined to be an AIT, the second separation unit 15 outputs the AIT to the communication AIT acquisition unit 16. In a case in which the received data is determined to be an application, the second separation unit 15 outputs the application to the application execution control unit 17.

In a case in which the received data is determined to be a TS packet, the second separation unit 15 extracts various data such as images, sound and an AIT from the TS packet. In a case in which an AIT is extracted, the second separation unit 15 outputs the AIT to the communication AIT acquisition unit 16; and in a case in which data other than an AIT is extracted, the second separation unit 15 outputs the data to the application execution control unit 17.

The communication AIT acquisition unit 16 acquires the AIT that is output from the second separation unit 15, and stores the AIT into the AIT storage unit 23.

The application execution control unit 17 acquires an application based on an AIT or an execution instruction from the user through the wireless remote controller R, and controls execution of the acquired application. The application execution control unit 17 outputs audio data of the application content, which is acquired from the service server 3 by executing the application, to the audio control unit 18, and outputs the video data of the application content, which is acquired from the service server 3, to the display control unit 19.

FIG. 4 is a diagram showing an example of an AIT described in an XML format. As described above, an AIT includes a single or plurality of items of individual management information respectively corresponding to a single or plurality of applications, for the purpose of respectively managing the single or plurality of applications.

More specifically, code described within a range from a tag <mhp: Application> to a tag </mhp: Application> shown in FIG. 4 correspond to individual management information regarding a single application. A plurality of items of individual management information can be described in the AIT by newly describing individual management information of other applications after the tag </mhp: Application>.

The codes corresponding to the individual management information include for example a code corresponding to a tag <mhp: appId> that shows ID (identification information) of the application. A code corresponding to a tag <mhp: controlCode mhp: type = "ARIB-J"> shows life cycle control information about this application. "AUTOSTART" shown in Fig. 4 is life cycle control information that makes the receiver 4 execute the application automatically. A code corresponding to a tag <mhp: location> shows location information indicating the location of this application. As shown in Fig. 4, the location information shows the address of the service server 3 described as the location of the application. The location information can designate, as the location of the application, the address of a storage (not shown in the drawings) in the receiver 4.

The application execution control unit 17 monitors the AIT storage 23. If a new AIT is stored, the application execution control unit 17 refers to control information about a life cycle described in this AIT. If the control information about the life cycle indicates "automatic execution," the application execution control unit 17 recognizes location information described in the AIT as a source from which an application is to be acquired. Then, the application execution control unit 17 acquires the application from the service server 3 through the communication unit 14 and the second separating unit 15, and executes the acquired application. In this case, the application is executed automatically in the absence of explicit operation instruction from a user of the receiver 4.

Further, the application execution control unit 17 accepts instruction to execute an application from a user of the receiver 4 through the remote controller R. As an example, the remote controller R has a Hybridcast (registered trademark) button. In response to press of the Hybridcast button by the user of the receiver 4, the application execution control unit 17 accepts instruction to execute a menu screen on which selection of the application to be executed is accepted.

In response to acceptance of instruction to execute a menu screen, the application execution control unit 17 refers to the AIT storage 23 to identify an AIT corresponding to an executable application. Then, the application execution control unit 17 outputs to the display control unit 19 video data to form a menu screen on which an application corresponding to the identified AIT can be selected, and displays this menu screen on the display 21.

If accepting operation to select an application made by a user of the receiver 4 through the remote controller R, the application execution control unit 17 acquires the application by referring to location information about this application described in an AIT, and executes the application. Using the remote controller R is not the only way of displaying a menu screen but the menu screen can be displayed by different means.

An application makes the application execution control unit 17 acquire video data and audio data of an application content from the service server 3. Then, the application execution control unit 17 outputs to the audio control unit 18 the audio data of the application content acquired by the application, and outputs to the display control unit 19 the video data of the application content acquired by the application. If the application is one that provides an application content to run in cooperation with a program content, video data and audio data of the application content are displayed on the display 21 in cooperation with video data and audio data of the program content.

The application execution control unit 17 monitors the AIT storage 23. If a new AIT describing individual management information corresponding to an application being executed is stored in the AIT storage 23, the application execution control unit 17 controls the application being executed based on life cycle control information as part of this individual management information. If the life cycle control information about the application indicates "completion", for example, the application execution control unit 17 completes the application.

The audio control unit 18 outputs to the speaker 20 audio data output from the first separating unit 12 while synchronizing this audio data with video data whose display is controlled by the display control unit 19. If audio data output from the application execution control unit 17 can be synchronized with video data whose display is controlled by the display control unit 19, the audio control unit 18 outputs the audio data to the speaker 20 while synchronizing the audio data with this video data.

The display control unit 19 displays on the display 21 video data output from the first separating unit 12 while synchronizing the video data with audio data whose output is controlled by the audio control unit 18. If video data output from the application execution control unit 17 can be synchronized with audio data whose output is controlled by the audio control unit 18, the display control unit 19 displays the video data on the display 21 while synchronizing the video data with this audio data.

The memory 22 stores metadata about a program content such as an EIT and other information of various types.

The AIT storage 23 stores AITs acquired by the broadcast AIT acquiring unit 13 and the communication AIT acquiring unit 16.

Distribution of a program content from a key station (broadcasting station 1) to a local subordinate station is described next. Most of program contents to be relayed nationwide are generated by the key station, and are transmitted to an affiliated broadcasting station (subordinate station) in every local city which receives these contents through a relay channel. The subordinate station decodes a broadcast signal once transmitted from the key station, encodes the decoded signal again, and outputs the encoded signal.

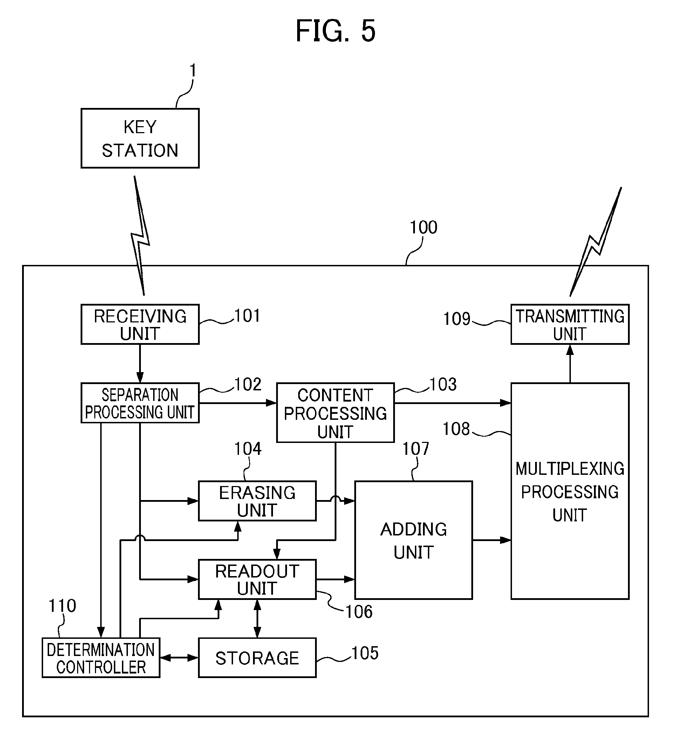

The structure of broadcast equipment 100 in the subordinate station is described below. As shown in Fig. 5, the broadcast equipment 100 includes a receiving unit 101 (receiving unit), a separation processing unit 102 (separation processing unit), a content processing unit 103 (content processing unit), an erasing unit 104 (erasing unit), a storage 105, a readout unit 106 (readout unit), an adding unit 107 (adding unit), a multiplexing processing unit 108 (multiplexing processing unit), and a transmitting unit 109 (transmitting unit).

The receiving unit 101 receives a broadcast signal distributed from a different broadcasting station (such as the broadcasting station 1 as a key station).

The separation processing unit 102 separates a broadcast signal received by the receiving unit 101 into a content such as video (hereinafter called a program content) and control information. Conceptually, the control information includes metadata and application management information (AIT). The meta data is information multiplexed on a broadcast signal. The metadata is composed of a program title, program ID, a program outline, performer information, and date and time of broadcasting, for example.

The content processing unit 103 processes a program content separated by the separation processing unit 102. The content processing unit 103 decodes the program content and then encodes the decoded content again, for example.

The erasing unit 104 erases application management information (AIT) from control information separated by the separation processing unit 102.

The storage 105 stores an AIT corresponding to an application integrating with a program content.

The readout unit 106 reads out an AIT integrating with a program content from the storage 105 based on information (such as program ID) indicating the program content and contained in control information.

The adding unit 107 adds an AIT read out by the readout unit 106 to control information from which an AIT has been erased by the erasing unit 104.

The multiplexing processing unit 108 multiplexes control information to which a new AIT has been added by the adding unit 107 and a program content in a state after being processed by the content processing unit 103.

The transmitting unit 109 transmits, as a broadcast signal, a signal resulting from the multiplexing process by the multiplexing processing unit 108.

In the broadcast equipment 100 of the aforementioned structure, in response to replacement of some program content delivered from the key station with a different program content by the content processing unit 103, for example, an AIT is replaced with an AIT corresponding to an application integrating with this different program content. This advantageously prevents mismatch between a program content and an AIT.

As shown in Fig. 5, the broadcast equipment 100 may further include a determination control unit 110 (determination control unit) that determines if application management information should be replaced.

The storage 105 has an association table containing content identification information uniquely identifying a content such as video and application management information integrating with this content such as video that are associated with each other.

The determination control unit 110 refers to the association table. If confirming based on content identification information therein about a content such as video that the storage 105 stores an AIT relating to this content such as video, the determination control unit 110 exerts control to make the erasing unit 104 and the readout unit 106 replace an AIT.

According to the aforementioned structure, if the storage 105 does not store an AIT required for replacement, the broadcast equipment 100 does not replace an AIT and does not change control information separated by the separation processing unit 102. The broadcast equipment 100 supplies the control information as it is to the multiplexing processing unit 108 through the erasing unit 104 and the adding unit 107. Then, the broadcast equipment 100 makes the multiplexing processing unit 108 multiplex the control information and a program content in a state after being processed by the content processing unit 103.

As a result, the broadcast equipment 100 can replace an AIT where necessary.

As described above, an AIT contains location information indicating the location of a integrating application (see Fig. 4).

Thus, the broadcast equipment 100 replaces an AIT in control information about a broadcast signal received by the receiving unit 101 with an AIT stored in the storage 105. Thus, a service server to be accessed based on an AIT can differ between the key station and the subordinate station, so that a processing load on the service server can be reduced.

The content processing unit 103 may also be configured to replace an advertising content in a program content with a different advertising content. The readout unit 106 may also be configured to read out integrating application management information from the storage 105 that corresponds to the advertising content replaced by the content processing unit 103.

Conceptually, the advertising content includes program publicity (what is called program promotion) and a CM (commercial message).

The broadcast equipment 100 has the function of changing metadata where appropriate that is implemented if change of metadata becomes necessary as a result of replacement of an advertising content.

As described, the broadcast equipment 100 further replaces an AIT in response to replacement of an advertising content. This advantageously prevents mismatch between a replaced advertising content and an AIT to occur in a subordinate station, for example.

The description of this embodiment is mainly intended for the structure and operation of the broadcast equipment, to which this invention is not intended to be limited. This invention may also be configured as a method and a program which include every component and which are executed to replace application management information integrating with a broadcast content, where necessary.

This invention may also be implemented by storing a program to realize the function of the broadcast equipment on a computer-readable recording medium, and making a computer system read the program recorded on the recording medium and execute the program.

The "computer system" as used herein includes an OS and hardware such as peripheral devices. The "computer-readable recording medium" refers to a storage device such as a portable medium including a flexible disk, a magneto-optical disk, ROM, CD-ROM, etc. and a hard disk or the like built in a computer system.

Furthermore, the "computer-readable recording medium" may include a medium for dynamically retaining a program for a short period of time, e.g. for transmitting a program through a network such as the Internet or a communication line such as a telephone line, or may be a medium for retaining a program for a certain period of time, e.g. volatile memory in a computer system serving as a server or a client in such a case. Moreover, the program may be a program for implementing a part of the functions, or may be a program for implementing the functions by combining programs already recorded in a computer system.

## Claims

1. Broadcast equipment comprising: receiving unit that receives a broadcast signal distributed from a different broadcasting station;
separation processing unit that separates the broadcast signal received by the receiving unit into a content such as video and control information;
content processing unit that processes the content such as video separated by the separation processing unit;
erasing unit that erases application management information from the control information separated by the separation processing unit;
storing unit that stores management information about a integrating application integrating with a content such as video into a storage;
readout unit that reads out application management information integrating with the content such as video from the storage based on information indicating the content such as video and contained in the control information;
adding unit that adds application management information read out by the readout unit to the control information from which application management information has been erased by the erasing unit;
multiplexing processing unit that multiplexes control information to which new application management information has been added by the adding unit and a content such as video in a state after being processed by the content processing unit; and
transmitting unit that transmits, as a broadcast signal, a signal resulting from the multiplexing process by the multiplexing processing unit.

2. The broadcast equipment according to claim 1, comprising determination control unit that determines if application management information should be replaced, wherein
the storage has an association table containing content identification information uniquely identifying a content such as video and application management information integrating with this content such as video that are associated with each other, and
the determination control unit refers to the association table, and if confirming based on content identification information therein about a content such as video that the storage stores application management information relating to this content such as video, the determination control unit exerts control to make the erasing unit and the readout unit replace application management information.

3. The broadcast equipment according to claim 1 or 2, wherein the application management information contains information about a location of a integrating application.

4. The broadcast equipment according to claim 1, wherein the content processing unit replaces an advertising content in the content such as video with a different advertising content, and
the readout unit reads out application management information from the storage that corresponds to the advertising content replaced by the content processing unit.
